# FASCICULE DE BREVET EUROPEEN

(11) **EP 2 452 184 B1**
(45) Date de publication et mention de la délivrance du brevet: **06.03.2013**
(21) Numéro de dépôt: 10742021.8
(22) Date de dépôt: 01.07.2010
(51) Int. Cl.: G01N 27/90, G01N 29/22, G01N 29/24, G01N 29/07

(54) **DISPOSITIF DE CONTROLE D'UN MOTEUR DE TURBOMACHINE**
INSPEKTIONSGERÄT FÜR EINE TURBOMASCHINE
INSPECTION DEVICE FOR A TURBO-MACHINE

(30) Priorité: 09.07.2009 FR 0903400
(43) Date de publication de la demande: 16.05.2012
(73) Titulaire: Snecma, 75015 Paris (FR)
(72) Inventeur: GAISNON, Patrick, 77550 MOISSY CRAMAYEL CEDEX (FR); MISTRAL, Quentin, 77550 MOISSY CRAMAYEL CEDEX (FR); MOZER, Sylvie, 77550 MOISSY CRAMAYEL CEDEX (FR); SAMAK, Nicolas, 77550 MOISSY CRAMAYEL CEDEX (FR)
(74) Mandataire: Ramey, Daniel
(86) Numéro de dépôt international: PCT/FR2010/051383
(87) Numéro de publication internationale: WO 2011/004101

(56) Documents cités:
- EP-A1- 1 759 629
- WO-A1-98/32380
- US-A- 4 139 822
- US-A- 4 149 419

## Description

La présente invention concerne un dispositif de contrôle non destructif *in situ* de pièces d'un moteur, en particulier de turbomachine.

Le contrôle non destructif (CND) de pièces d'un moteur de turbomachine permet de vérifier l'état de ces pièces sans les dégrader. Dans certains cas, ce contrôle peut nécessiter la dépose du moteur et son démontage partiel pour inspecter des pièces difficilement accessibles avec des moyens de contrôle.

Un dispositif de contrôle connu, voir US 4,139,822, comprend une canne rigide portant à son extrémité distale une sonde de contrôle ou un capteur. Dans le cas où la turbomachine est équipée d'orifices endoscopiques, cette canne est introduite dans la turbomachine à travers un de ces orifices pour le contrôle *in situ* de pièces de la turbomachine, ce qui évite la dépose ou le démontage du moteur.

Cependant, la zone accessible par cette canne est très limitée et s'étend en général au droit de l'orifice endoscopique et à faible distance de cet orifice. De plus, lorsque la sonde portée par la canne doit être utilisée sur une pièce, cette sonde doit être appliquée avec une certaine pression et pendant une durée déterminée sur une surface de cette pièce, ce qui n'est pas toujours possible avec le dispositif précité.

Par exemple, dans le cas des joints d'étanchéité à labyrinthe d'une turbomachine, des léchettes annulaires externes portées par le rotor de la turbomachine coopèrent avec des blocs de matière abradable portés par des plates-formes annulaires internes des aubes de stator de la turbomachine. Pour accéder aux léchettes d'un joint à labyrinthe, il faut donc passer la sonde de contrôle dans un espace très étroit qui peut avoir une largeur ou dimension axiale de 1 mm environ, ce qui n'est pas possible avec la canne précitée.

Il en résulte que certaines zones d'une turbomachine restent difficilement accessibles par les dispositifs de contrôle non destructif connus, car ceux-ci ne sont pas conçus pour passer à travers des orifices ou des passages de petite taille et à travers plusieurs orifices et/ou passages consécutifs non alignés.

De plus, lors du contrôle d'une pièce, la sonde doit en général être maintenue immobile vis-à-vis du moteur, ce qui est difficile avec la canne précitée de la technique antérieure.

L'invention propose une solution simple, efficace et économique aux problèmes de la technique antérieure.

Elle a notamment pour objet un dispositif de contrôle non destructif permettant de contrôler des pièces quelles que soient leurs positions et leur accessibilité dans une turbomachine, et de maintenir fixement la sonde ou le capteur de contrôle lors d'une étape de contrôle.

Elle propose à cet effet un dispositif de contrôle non destructif *in situ* de pièces d'un moteur, en particulier de turbomachine, comportant une canne longitudinale à l'extrémité distale de laquelle est montée une sonde de contrôle, caractérisé en ce qu'il comprend un doigt longitudinal monté pivotant sur l'extrémité distale de la canne, ce doigt portant à une première extrémité des moyens de support de la sonde de contrôle et à une seconde extrémité des moyens d'accrochage sur un élément du moteur, ces moyens d'accrochage étant déplaçables dans une direction parallèle au doigt.

Le déplacement des moyens d'accrochage du dispositif selon l'invention dans une direction parallèle au doigt permet de les éloigner ou les rapprocher des moyens de support de la sonde de contrôle, en fonction de l'environnement spécifique des pièces à contrôler du moteur. Ces moyens d'accrochage sont destinés à venir en appui sur un élément du moteur de façon à stabiliser le dispositif lors du contrôle des pièces. Un élément du moteur peut par exemple être enserré entre les moyens de support et les moyens d'accrochage du dispositif selon l'invention pour immobiliser le dispositif lors de l'opération de contrôle. Les moyens de support de la sonde sont conçus pour être introduits dans des espaces très étroits de façon à positionner la sonde de contrôle dans des endroits difficilement accessibles du moteur.

Selon une autre caractéristique de l'invention, ces moyens de support comprennent une lame de forme allongée qui est montée pivotante par une de ses extrémités sur la première extrémité du doigt, entre une position rabattue dans laquelle elle s'étend sensiblement parallèlement au doigt et une position déployée dans laquelle elle s'étend sensiblement perpendiculairement au doigt.

La lame de support de la sonde de contrôle a de préférence au repos une forme allongée et légèrement incurvée autour de son axe d'allongement. La lame selon l'invention est avantageusement élastiquement déformable en flexion, ce qui permet notamment d'appliquer la sonde avec une certaine pression (correspondant à la flexion de la lame) sur la surface de la pièce à contrôler, lorsque cette sonde doit être en appui sur la pièce lors du contrôle. Cette lame est en outre déplaçable en pivotement entre une position rabattue dans laquelle elle s'étend le long et à côté du doigt et une position déployée dans laquelle elle s'étend sensiblement perpendiculairement au doigt. La lame est amenée en position rabattue préalablement à l'introduction de la canne dans la turbomachine, afin de protéger la sonde contre d'éventuels chocs avec des pièces environnantes. Le pivotement de la lame peut être commandé par un câble, par exemple du type « corde à piano », s'étendant le long de la canne et relié à son extrémité distale à la lame. Le dispositif peut comprendre des moyens élastiques de rappel sollicitant la lame dans sa position rabattue ou déployée.

La sonde de contrôle peut être fixée, par exemple par collage, à une extrémité libre de la lame. A titre d'exemple, la sonde de contrôle est un capteur à courants de Foucault ou à ultrasons ou une mini-caméra.

Le doigt est avantageusement monté pivotant par sa partie médiane sur l'extrémité distale de la canne, entre une position rabattue dans laquelle il s'étend sensiblement parallèlement à la canne et une position déployée dans laquelle il s'étend sensiblement perpendiculairement à la canne. Ceci permet d'augmenter davantage les zones accessibles par le dispositif selon l'invention. Le pivotement du doigt peut être commandé par un câble, par exemple du type « corde à piano », s'étendant le long de la canne et relié à son extrémité distale au doigt ou à la lame.

Les câbles précités peuvent être logés à l'intérieur de la canne et être reliés à des moyens de commande appropriés situés à l'extrémité proximale de la canne.

Le dispositif peut également comprendre des moyens élastiques de rappel sollicitant le doigt dans sa position rabattue ou déployée.

Les moyens d'accrochage du dispositif selon l'invention peuvent comprendre une tige montée coulissante dans un évidement axial correspondant de la seconde extrémité du doigt et portant à son extrémité libre une patte d'appui s'étendant sensiblement perpendiculairement à la tige.

Le déplacement des moyens d'accrochage peut être commandé par au moins un câble s'étendant le long de la canne et relié à son extrémité distale à l'extrémité de la tige opposée à la patte d'appui.

L'invention sera mieux comprise et d'autres détails, caractéristiques et avantages de la présente invention apparaîtront plus clairement à la lecture de la description suivante, faite à titre d'exemples non limitatifs et en référence aux dessins annexés, dans lesquels :
- la figure 1 est une vue schématique partielle d'un dispositif de contrôle selon l'invention, représentée dans sa position rabattue ou rangée ;
- la figure 2 est une vue schématique partielle en perspective du dispositif de la figure 1, représentée dans sa position déployée ;
- la figure 3 est une vue schématique en coupe axiale du dispositif de la figure 1, dans sa position déployée ;
- la figure 4 est une autre vue très schématique en coupe axiale du dispositif de la figure 1, et représente des moyens de commande de ce dispositif ; et
- les figures 5 à 8 sont des vues schématiques en perspective d'une partie d'un moteur de turbomachine dans lequel le dispositif des figures 1 à 4 est introduit pour le contrôle *in situ* de pièces, et représentent différentes étapes de positionnement de ce dispositif dans le moteur.

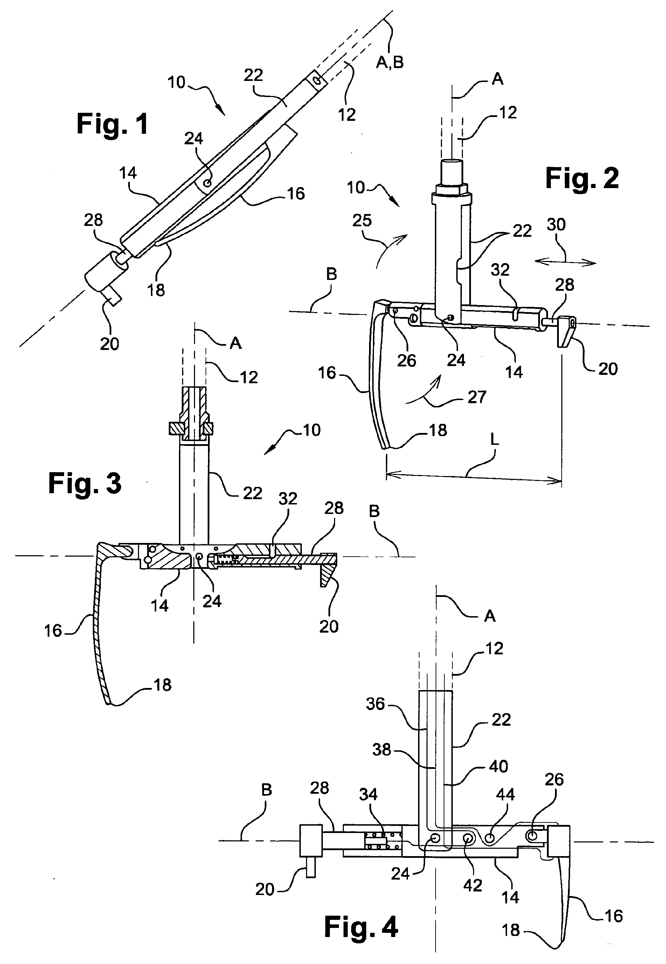

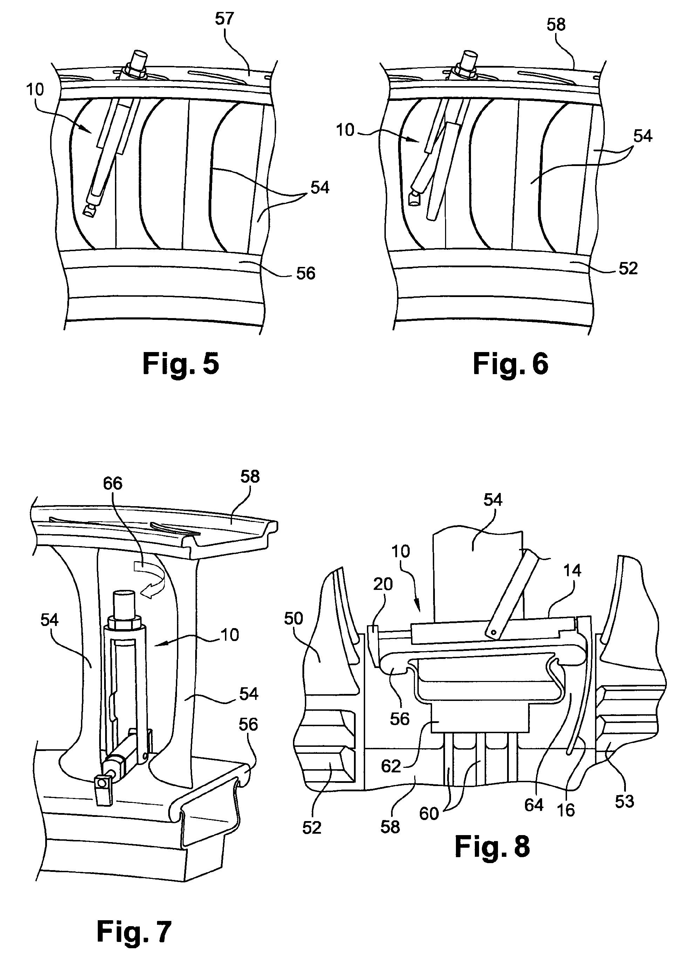

On se réfère d'abord aux figures 1 à 4 qui représentent un dispositif 10 selon l'invention de contrôle non destructif de pièces d'un moteur de turbomachine, ce moteur étant partiellement décrit dans ce qui suit en référence aux figures 5 à 8.

Le dispositif 10 comprend une canne longitudinale 12 (représentée en traits pointillés) à l'extrémité distale de laquelle est monté pivotant un doigt 14 qui porte à une de ses extrémités une lame 16 de support d'une sonde de contrôle 18 et à son extrémité opposée un patin 20 d'appui et/ou d'accrochage sur un élément du moteur.

La canne 12 porte à son extrémité distale deux pattes longitudinales 22 parallèles et espacées l'une de l'autre, le doigt 14 étant monté pivotant par sa partie médiane sur un axe 24 s'étendant entre les extrémités libres des pattes 22.

Le doigt 14 est mobile en pivotement (flèche 25) entre une position rabattue représentée en figure 1 dans laquelle il s'étend entre les pattes et parallèlement à l'axe longitudinal A de la canne, et une position déployée représentée aux figures 2 à 4 dans laquelle il s'étend perpendiculairement à cet axe A.

La lame 16 a une forme allongée et est montée pivotante (flèche 27) par une de ses extrémités autour d'un axe 26 porté par une des extrémités du doigt 14, entre une position rabattue représentée en figure 1 où elle s'étend le long du doigt, et une position déployée représentée aux figures 2 à 4 où elle s'étend perpendiculairement à l'axe B du doigt. La lame est de préférence fixée de manière amovible sur le doigt de façon à pouvoir être remplacée par une autre par exemple en cas d'usure de la lame ou de la sonde ou pour changer le type de sonde.

La lame 16 est relativement mince et élastiquement déformable en flexion. La sonde de contrôle 18, qui est par exemple une sonde à courants de Foucault ou à ultrasons, est fixée par collage sur l'extrémité libre de la lame. En variante ou en complément, une caméra miniature peut être fixée sur l'extrémité libre de la lame.

Le patin 20 est fixé à une extrémité d'une tige 28 qui est montée coulissante dans un logement axial correspondant du doigt, débouchant sur son extrémité opposée à la lame 16. Le patin 20 s'étend sensiblement parallèlement et dans la même direction que la lame 16, lorsque cette dernière est en position déployée (figures 2 à 4).

Le patin 20 est mobile en translation dans une direction parallèle à l'axe B du doigt 14 par coulissement de la tige 28 dans le logement du doigt. Le déplacement du patin (flèche 30) fait varier la distance L entre ce patin et la lame 16 de support de la sonde (figure 2).

Des moyens élastiques de rappel 34, tels qu'un ressort hélicoïdal, sont montés autour de la tige 28 et sollicitent le patin 20 dans sa position la plus éloignée de la lame 16 (figure 4).

Le doigt 14 porte des moyens de butée 32 coopérant avec la tige 28 pour limiter la course de déplacement du patin 20 vis-à-vis du doigt.

La figure 4 représente de manière schématique les moyens de commande du déplacement du patin 20 et du pivotement du doigt 14 et de la lame 16. Ces moyens de commande comprennent des câbles 36, 38 et 40, par exemple du type « corde à piano », qui s'étendent le long de la canne 12 et qui sont reliés à leurs extrémités proximales à des moyens de commande appropriés situés à l'extrémité proximale de la canne. Ces câbles sont par exemple en acier et ont un diamètre de l'ordre de 0,5mm.

L'extrémité distale du câble 36 est reliée à l'extrémité de la tige 28 opposée au patin 20 pour commander le déplacement en translation du patin le long de l'axe B du doigt. Lorsqu'un effort de traction est appliqué sur le câble 36, le patin se rapproche de la lame 16 de support de la sonde.

L'extrémité distale du câble 38 est reliée à l'extrémité de la lame 16, opposée à la sonde 18, de façon à ce qu'un effort de traction sur ce câble entraîne à la fois le pivotement de la lame et du doigt depuis leurs positions rabattues jusqu'à leurs positions déployées respectives.

L'extrémité distale du câble 40 est reliée à l'extrémité de la lame opposée à la sonde de façon à ce qu'un effort de traction sur ce câble entraîne simultanément le pivotement de la lame et du doigt depuis leurs positions déployées jusqu'à leurs positions rabattues respectives.

Le doigt 14 porte des moyens 42, 44 de guidage des câbles précités de façon à orienter les efforts appliqués sur les pièces à déplacer au moyen des câbles, dans des directions données. Dans l'exemple représenté, des premiers moyens 42 de guidage du câble 36 de commande du déplacement du patin 20 transforment un effort de traction parallèle à l'axe de la canne 12 en un effort de traction parallèle à l'axe B du doigt. Des seconds moyens 44 de guidage du câble 38 de commande du pivotement du doigt et de la lame transforment un effort de traction parallèle à l'axe A de la canne en un effort de traction sensiblement parallèle à l'axe B du doigt.

Le dispositif 10 selon l'invention peut en outre comprendre des moyens élastiques de rappel sollicitant le doigt et/ou la lame dans leurs positions rabattues ou déployées respectives.

On se réfère désormais aux figures 5 à 8 qui représentent des étapes d'un procédé de contrôle *in situ* de pièces d'un moteur de turbomachine, avec le dispositif tel que décrit ci-dessus.

La figure 8 est une vue schématique partielle en perspective d'un étage de turbine ou de compresseur de la turbomachine. Cet étage comprend une rangée annulaire d'aubes de rotor 50 portées par un disque 52, et une rangée annulaire d'aubes de stator 54 disposées en amont des aubes de rotor 50 et s'étendant radialement entre une plate-forme annulaire interne 56 et une plate-forme annulaire externe 57 (figures 5 à 8). La plate-forme interne 56 entoure une paroi de rotor 58 sensiblement cylindrique reliant le disque de rotor 52 à un autre disque de rotor 53 situé en amont des aubes de stator 54.

Un joint d'étanchéité du type à labyrinthe est monté entre la paroi de rotor 58 et la plate-forme interne 56, et comprend des léchettes annulaires 60 s'étendant radialement vers l'extérieur depuis la paroi de rotor 58 et coopérant avec des blocs de matière abradable 62 fixés à la périphérie interne de la plate-forme 56.

La plate-forme externe 57 comprend des orifices sensiblement radiaux pour le passage du dispositif 10 tel que décrit précédemment, pour le contrôle de pièces difficilement accessibles, telles que la paroi de rotor 58 et les léchettes annulaires 60.

Le contrôle de la paroi de rotor 58 et des léchettes 60 au moyen du dispositif 10 selon l'invention est réalisé comme suit. Le doigt 14 et la lame 16 sont amenés dans leurs positions rabattues représentées en figure 1 dans laquelle le doigt 14 est aligné avec l'axe A de la canne 12 et la lame 16 s'étend le long du doigt. Le dispositif 10 est engagé depuis l'extérieur dans un des orifices de la plate-forme externe 57, jusqu'à ce que le doigt 14 soit situé entre les deux plates-formes 56 et 57 (figure 5), c'est-à-dire dans la veine d'écoulement des gaz du compresseur ou de la turbine. Un effort de traction est appliqué sur le câble 38 de façon à ce que le doigt 14 pivote autour de l'axe 24 et que la lame 16 pivote autour de l'axe 26 (figure 6), depuis leurs positions rabattues jusqu'à leurs positions déployées respectives représentées aux figures 2 à 4. Ces pivotements peuvent être facilités par les moyens élastiques de rappel précités du dispositif. Le patin d'appui 20 est en outre sollicité dans sa position la plus éloignée de la lame 16, par les moyens élastiques 34 précités. La canne 12 est ensuite tournée autour de son axe A, de façon à ce que l'extrémité libre de la lame 16 soit située au niveau de l'espace annulaire 64 s'étendant axialement entre le bord annulaire aval de la plate-forme interne 56 des aubes de stator 16 et le bord annulaire amont du disque 53. Le dispositif est déplacé en translation le long de l'axe A de la canne vers la plate-forme interne 56, jusqu'à ce que le doigt 14 soit situé au voisinage de cette plate-forme et que la lame 16 soit engagé dans l'espace 64 précitée. Le doigt 14 peut à nouveau être déplacé en rotation autour de l'axe A de la canne 12 (flèche 66 en figure 7), de façon à ce que le patin 20 et la lame 16 viennent en appui sur les bords annulaires amont et aval, respectivement, de la plate-forme interne 56. Un effort de traction est ensuite appliqué sur le câble 36 de façon à ce que le patin se déplace vers la lame et soit maintenu fixement contre le bord annulaire amont de la plate-forme 56. Cette plate-forme 56 est alors enserrée entre le patin 20 et la lame 16 et le dispositif est immobilisé sur la plate-forme pour le contrôle des léchettes 60 (figure 8). Dans cette position, la sonde de contrôle 18 est en appui sur la surface extérieure de la paroi de rotor 58 portant les léchettes annulaires 60 (figure 8). Ceci provoque une légère déformation élastique en flexion de la lame, dont la force de rappel élastique assure le maintien de la sonde contre la paroi 58. Le contrôle de la paroi 58 au moyen de la sonde 18 peut alors commencer. La paroi de rotor 58 est déplacée en rotation autour de son axe de façon à contrôler une zone annulaire complète (s'étendant sur 360°) de cette paroi au moyen de la sonde.

## Revendications

1. Dispositif (10) de contrôle non destructif *in situ* de pièces d'un moteur, en particulier de turbomachine, comportant une canne longitudinale (12) à l'extrémité distale de laquelle est montée une sonde de contrôle (18), **caractérisé en ce qu'**il comprend un doigt longitudinal (14) monté pivotant sur l'extrémité distale de la canne, ce doigt portant à une première extrémité des moyens (16) de support de la sonde de contrôle et à une seconde extrémité des moyens (20) d'accrochage sur un élément du moteur, ces moyens d'accrochage étant déplaçables dans une direction (30) parallèle au doigt.

2. Dispositif selon la revendication 1, **caractérisé en ce que** les moyens de support comprennent une lame (16) de forme allongée qui est montée pivotante par une de ses extrémités sur la première extrémité du doigt (14), entre une position rabattue dans laquelle elle s'étend sensiblement parallèlement au doigt et une position déployée dans laquelle elle s'étend sensiblement perpendiculairement au doigt.

3. Dispositif selon la revendication 2, **caractérisé en ce que** la lame (16) est élastiquement déformable en flexion.

4. Dispositif selon la revendication 2 ou 3, **caractérisé en ce que** la sonde de contrôle (18) est fixée, par exemple par collage, à l'extrémité libre de la lame (16).

5. Dispositif selon l'une des revendications 2 à 4, **caractérisé en ce qu'**il comprend des moyens élastiques de rappel sollicitant la lame (16) dans sa position rabattue ou déployée.

6. Dispositif selon l'une des revendications 2 à 5, **caractérisé en ce qu'**il comprend au moins un câble de commande du pivotement de la lame (16) depuis sa position déployée jusqu'à sa position rabattue et/ou depuis sa position rabattue jusqu'à sa position déployée, le ou les câbles de commande s'étendant le long de la canne (12).

7. Dispositif selon l'une des revendications précédentes, **caractérisé en ce que** le doigt (14) est monté pivotant par sa partie médiane sur l'extrémité distale de la canne (12), entre une position rabattue dans laquelle il s'étend sensiblement parallèlement à la canne et une position déployée dans laquelle il s'étend sensiblement perpendiculairement à la canne.

8. Dispositif selon la revendication 7, **caractérisé en ce qu'**il comprend des moyens élastiques de rappel sollicitant le doigt (14) dans sa position rabattue ou déployée.

9. Dispositif selon la revendication 7 ou 8, **caractérisé en ce qu'**il comprend au moins un câble de commande du pivotement du doigt (14) depuis sa position déployée jusqu'à sa position rabattue et/ou depuis sa position rabattue jusqu'à sa position déployée, le ou les câbles de commande s'étendant le long de la canne (12).

10. Dispositif selon l'une des revendications précédentes, **caractérisé en ce que** les moyens d'accrochage comprennent une tige (28) qui est montée coulissante dans un évidement axial correspondant de la seconde extrémité du doigt (14) et qui porte à son extrémité libre une patte d'appui (20) s'étendant sensiblement perpendiculairement à la tige.

11. Dispositif selon la revendication 10, **caractérisé en ce que** le déplacement des moyens d'accrochage (20) est commandé par au moins un câble s'étendant le long de la canne (12) et relié à son extrémité distale à l'extrémité de la tige opposée à la patte d'appui.

12. Dispositif selon l'une des revendications précédentes, **caractérisé en ce que** la sonde de contrôle (18) est un capteur à courants de Foucault ou à ultrasons ou une caméra.

## Claims

1. A device (10) for non-destructive in situ inspection of parts of an engine, in particular a turbine engine, the device comprising a longitudinal stick (12) having an inspection probe (18) mounted at the distal end thereof, the device being **characterized in that** it comprises a longitudinal finger (14) pivotally mounted to the distal end of the stick, the finger carrying at a first end support means (16) for supporting the inspection probe, and at a second end catch means (20) for catching on an element of the engine, these catch means being movable in a direction (30) parallel to the finger.

2. A device according to claim 1, **characterized in that** the support means comprise a blade (16) of elongate shape that is pivotally mounted via one of its ends to the first end of the finger (14) to pivot between a folded position in which it extends substantially parallel to the finger and a deployed position in which it extends substantially perpendicularly to the finger.

3. A device according to claim 2, **characterized in that** the blade (16) is elastically deformable in bending.

4. A device according to claim 2 or claim 3, **characterized in that** the inspection probe (18) is fastened to the free end of the blade (16), e.g. by adhesive.

5. A device according to any one of claims 2 to 4, **characterized in that** it includes resilient return means urging the blade (16) towards its folded position or its deployed position.

6. A device according to any one of claims 2 to 5, **characterized in that** it includes at least one control cable for controlling pivoting of the blade (16) from its deployed position to its folded position and/or from its folded position to its deployed position, the control cable(s) extending along the stick (12).

7. A device according to any preceding claim, **characterized in that** the finger (14) is pivotally mounted in its middle portion to the distal end of the stick (12), to pivot between a folded position in which it extends substantially parallel to the stick and a deployed position in which it extends substantially perpendicularly to the stick.

8. A device according to claim 7, **characterized in that** it includes resilient return means urging the finger (14) into its folded position or its deployed position.

9. A device according to claim 7 or claim 8, **characterized in that** it includes at least one control cable for controlling pivoting of the finger (14) from its deployed position to its folded position and/or from its folded position to its deployed position, the control cable(s) extending along the stick (12).

10. A device according to any preceding claim, **characterized in that** the catch means comprise a rod (28) that is slidably mounted in a corresponding axial recess in the second end of the finger (14) and that carries at its free end a bearing tab (20) that extends substantially perpendicularly to the rod.

11. A device according to claim 10, **characterized in that** the movement of the catch means (20) is controlled by at least one cable extending along the stick (12) and connected at its distal end to the end of the rod that is opposite from the bearing tab.

12. A device according to any preceding claim, **characterized in that** the inspection probe (18) is an eddy current sensor or an ultrasound sensor or a camera.

## Patentansprüche

1. Vorrichtung (10) zur nicht zerstörerischen Prüfung in situ von Teilen eines Motors, insbesondere einer Turbomaschine, enthaltend einen Längsstab (12), an dessen distalem Ende eine Prüfsonde (18) montiert ist, **dadurch gekennzeichnet, dass** sie einen longitudinalen Finger (14) aufweist, der am distalen Ende des Stabs verschwenkbar gelagert ist, wobei dieser Finger an einem ersten Ende Mittel (16) zum Haltern der Prüfsonde und an einem zweiten Ende Mittel (20) zum Verhaken an einem Teil des Motors trägt, wobei diese Verhakungsmittel in einer Richtung (30) parallel zum Finger verstellbar sind.

2. Vorrichtung nach Anspruch 1, **dadurch gekennzeichnet, dass** die Halterungsmittel eine Zunge (16) mit langgestreckter Form aufweisen, die mit ihrem einen Ende am ersten Ende des Fingers (14) zwischen einer eingeklappten Stellung, in welcher sie sich im wesentlichen parallel zum Finger erstreckt, und einer ausgeklappten Stellung verschwenkbar gelagert ist, in welcher sie sich im wesentlichen senkrecht zum Finger erstreckt.

3. Vorrichtung nach Anspruch 2, **dadurch gekennzeichnet, dass** die Zunge (16) elastisch biegeverformbar ist.

4. Vorrichtung nach Anspruch 2 oder 3, **dadurch gekennzeichnet, dass** die Prüfsonde (18) an das freie Ende der Zunge (16) beispielsweise durch Verkleben befestigt ist.

5. Vorrichtung nach einem der Ansprüche 2 bis 4, **dadurch gekennzeichnet, dass** sie elastische Rückstellmittel aufweist, welche die Zunge (16) in ihre eingeklappte bzw. ausgeklappte Stellung beaufschlagen.

6. Vorrichtung nach einem der Ansprüche 2 bis 5, **dadurch gekennzeichnet, dass** sie zumindest ein Betätigungsseil zum Verschwenken der Zunge (16) aus ihrer ausgeklappten Stellung in ihre eingeklappte Stellung und/oder aus ihrer eingeklappten Stellung in ihre ausgeklappte Stellung aufweist, wobei das bzw. die Betätigungsseile sich entlang des Stabs (12) erstrecken.

7. Vorrichtung nach einem der vorangehenden Ansprüche, **dadurch gekennzeichnet, dass** der Finger (14) mit seinem Mittelabschnitt am distalen Ende des Stabs (12) zwischen einer eingeklappten Stellung, in welcher er sich im wesentlichen parallel zum Stab erstreckt, und einer ausgeklappten Stellung verschwenkbar gelagert ist, in welcher er sich im wesentlichen senkrecht zum Stab erstreckt.

8. Vorrichtung nach Anspruch 7, **dadurch gekennzeichnet, dass** sie elastische Rückstellmittel aufweist, welche den Finger (14) in seine eingeklappte bzw. ausgeklappte Stellung beaufschlagen.

9. Vorrichtung nach Anspruch 7 oder 8, **dadurch gekennzeichnet, dass** sie zumindest ein Betätigungsseil zum Verschwenken des Fingers (14) aus seiner ausgeklappten Stellung in seine eingeklappte Stellung und/oder aus seiner eingeklappten Stellung in seine ausgeklappte Stellung aufweist, wobei das bzw. die Betätigungsseile sich entlang des Stabs (12) erstrecken.

10. Vorrichtung nach einem der vorangehenden Ansprüche, **dadurch gekennzeichnet, dass** die Verhakungsmittel einen Stift (28) aufweisen, der in einer entsprechenden axialen Ausnehmung des zweiten Endes des Fingers (14) gleitbeweglich gelagert ist und an seinem freien Ende eine Abstützlasche (20) trägt, die sich im wesentlichen senkrecht zu dem Stift erstreckt.

11. Vorrichtung nach Anspruch 10, **dadurch gekennzeichnet, dass** die Verlagerung der Verhakungsmittel (20) über zumindest ein Seil gesteuert wird, das entlang des Stabs (12) verläuft und an seinem distalen Ende mit dem der Abstützlasche entgegengesetzten Ende des Stifts verbunden ist.

12. Vorrichtung nach einem der vorangehenden Ansprüche, **dadurch gekennzeichnet, dass** die Prüfsonde (18) ein Wirbelstrom- oder Ultraschallsensor oder eine Kamera ist.
